(19) Europäisches Patentamt
European Patent Office
Office européen des brevets

(11) **EP 4 585 046 A1**

(12) **EUROPEAN PATENT APPLICATION**

(43) Date of publication:
**16.07.2025 Bulletin 2025/29**

(21) Application number: **25150848.7**

(22) Date of filing: **09.01.2025**

(51) International Patent Classification (IPC):
**A01N 43/54** (2006.01)   **A01P 3/00** (2006.01)
**A01N 41/12** (2006.01)   **A01N 47/04** (2006.01)

(52) Cooperative Patent Classification (CPC):
(C-Sets available)
**A01N 43/54; A01N 41/12; A01N 47/04; A01P 3/00**
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.01.2024 EP 24305063**

(71) Applicants:
• **UPL Mauritius Limited
Port Louis (MU)**

• **UPL Europe Supply Chain GmbH
6343 Rotkreuz / Risch (CH)**

(72) Inventors:
• **D'INNOCENZO, Sebastien
08019 Barcelona (ES)**
• **PREVOT, Agnes
64150 Noguères (FR)**

(74) Representative: **J A Kemp LLP
80 Turnmill Street
London EC1M 5QU (GB)**

(54) **FUNGICIDAL COMBINATIONS**

(57) The present disclosure relates to a fungicidal combination comprising at least one multi-site fungicide and at least one anilinopyrimidine fungicide. The present disclosure also relates to a fungicidal composition comprising the fungicidal combination and at least one agrochemically acceptable excipient. Additionally, the present disclosure relates to a method for controlling growth of fungal disease in pcrop/tree plantations, the method comprising applying a fungicidal composition comprising the fungicidal combination to the plant, or a locus, or a plant propagation material thereof.

**EP 4 585 046 A1**

(52) Cooperative Patent Classification (CPC): (Cont.)

C-Sets
**A01N 43/54, A01N 41/12;**
**A01N 43/54, A01N 47/04**

**Description**

**FIELD OF THE DISCLOSURE**

The present disclosure relates to fungicidal combinations, compositions comprising said combinations and methods for controlling phytopathogenic fungal diseases. The present disclosure particularly relates to fungicidal combinations, compositions, and methods for controlling fungal scab.

**BACKGROUND OF THE DISCLOSURE**

Profitable crop production depends on effective pest control. Fungicides are an integral tool used by cultivators to achieve effective control of phytopathogenic fungi and their spores, to increase crop yield and quality. Fungal pathogens can disrupt food production for global food demand. The significance of emergent and resistant phytopathogenic fungal pathogens must be assessed with progressive, rapid and accurate disease recognition tools.

Fungi are the most crucial and common pathogens and the main cause of crop diseases. It infects a range of fruits and vegetables during plant growth, and storage and transportation of crop yield. Pathogenic fungi cause plant diseases such as anthracnose, leaf spot, rust, wilt, blight, coils, scab, gall, canker, damping-off, root rot, mildew, and dieback. Numerous synthetic fungicides for controlling the aforesaid fungal diseases have become ineffective due to development of fungal resistance.

To illustrate an example amongst the abovementioned diseases, scab is a notable disease, wherein despite applications of highly effective chemicals and use of resistant apple cultivars, apple scab causes greater economic losses of apples than any other apple disease. Scab affects foliage, young shoots, and fruit, but damage is the result of fruit infections. Infections in fruits are manifested as dark lesions on ripening fruit, most commonly on the upper surface, and may grow together to form large blotches. Lesions may have green or yellowish blotches that turn grayish when spores are produced. Apple scab infections are initiated in early spring on emerging and young leaves. *Venturia inaequalis* Cooke (Wint.) is a hemibiotrophic fungus that is the causal agent of the apple disease scab. The affected tissues eventually may become distorted and puckered, and leaf lesions become cracked and torn. Two to three consecutive defoliation events can weaken trees, resulting in a greater susceptibility to other stresses such as freeze damage, insect injury, and other diseases.

Inhibitory activity of fungicides can be enhanced in various ways to maximize benefit. A method for improving fungicidal activity is to apply a combination of fungicides. However, the efficacy of a fungicidal combination varies depending on the type of fungal pests controlled and the crop/plant affected by the pest. A varied number of pests target different crops and respond to different fungicides at varying extents.

Crop sensitivity differs based on the fungicides applied. As a result, it is a painstaking task to identify effective and appropriate fungicidal combinations, the amount of each fungicide in the combination, a fungicidal composition comprising said combination, the application rate of the fungicidal composition that is essential to achieve an efficacious control of fungal diseases and enhance the yield and quality of crops.

Different fungicides include multi-site fungicides and systemic fungicides. However, as crop tolerance decreases, lower application rates of fungicides are imposed, and fungal resistance is increasingly observed. There is also a need for alternative treatments having broader disease control, curative and preventive functions, and a lower dosage requirement. Therefore, a conducive alternative is to apply fungicides combining both protectant/multi-site fungicides and systemic fungicides as envisaged and demonstrated in the present disclosure to mainly broaden the spectrum of activity to delay selection of resistant fungal populations and to optimize efficacy.

**OBJECT OF THE DISCLOSURE**

It is an object of the present disclosure to provide a fungicidal combination comprising at least one multi-site fungicide and at least one systemic fungicide for effective control of phytopathogenic fungi, including resistant fungi.

It is an object of the present disclosure to provide fungicidal combinations comprising at least one multi-site fungicide and at least one anilinopyrimidine fungicide.

It is another object of the present disclosure to provide fungicidal combinations possessing enhanced efficacy over fungicides applied individually.

It is another object of the present disclosure to provide a fungicidal composition comprising at least one multi-site fungicide, at least one anilinopyrimidine fungicide and at least one agrochemically acceptable excipient.

It is another object of the present disclosure to provide a method for effective control of phytopathogenic fungi, including resistant fungi.

It is another object of the present disclosure to provide a method for controlling fungal scab.

It is another object of the present disclosure to provide a method for controlling and reducing the incidence of resistant phytopathogenic fungi affecting tree and orchard plantations.

It is another object of the present disclosure to provide the use of a fungicidal combination for controlling and reducing the incidence of resistant phytopathogenic fungi affecting tree and orchard plantations.

**SUMMARY OF THE DISCLOSURE**

In an aspect, the present disclosure provides a fungicidal combination comprising (a) at least one multi-site fungicide; and (b) at least one sytemic fungicide.

In an aspect, systemic fungicide is an anilinopyrimidine fungicide.

In an aspect, the present disclosure provides a fungicidal combination comprising (a) at least one multi-site fungicide; and (b) at least one anilinopyrimidine fungicide.

In an aspect, multisite fungicide is selected from the group comprising phthalimides, a copper salt, a sulphur-based fungicide, dithiocarbamates, chloronitriles, sulfamides, bis-guanidines, triazines, quinones, quinoxalines, maleimide and thiocarbamates

In another aspect, the present disclosure provides a fungicidal combination comprising (a) at least one phthalimide fungicide; and (b) at least one anilinopyrimidine fungicide.

In an aspect, the present disclosure provides a synergistic fungicidal combination comprising:

(a) at least one multi-site fungicide; and
(b) at least one anilinopyrimidine fungicide

wherein the multi-site fungicide and the anilinopyrimidine fungicide are present in a ratio of 0.01:10 to 10:0.01.

In an aspect, the present disclosure provides a synergistic fungicidal combination comprising:

(a) at least one multi-site fungicide; and
(b) at least one anilinopyrimidine fungicide

wherein the multi-site fungicide and the anilinopyrimidine fungicide are present in a ratio of 0.1:5 to 5:0.1.

In an aspect, the present disclosure provides a synergistic fungicidal combination comprising:

(a) at least one multi-site fungicide; and
(b) at least one anilinopyrimidine fungicide

wherein the multi-site fungicide and the anilinopyrimidine fungicide are present in a ratio of 0.5:1 to 1:0.5.

In an aspect, the present disclosure provides a fungicidal combination comprising captan and pyrimethanil.

In another aspect, the present disclosure provides a fungicidal composition comprising: (a) at least one multi-site fungicide; (b) at least one anilinopyrimidine fungicide; and (c) at least one agrochemically acceptable excipient.

In another aspect, the present disclosure provides a fungicidal composition comprising captan, pyrimethanil and at least one agrochemically acceptable excipient.

In another aspect, the present disclosure provides use of a fungicidal combination comprising at least one multi-site fungicide and at least one anilinopyrimidine fungicide, for controlling fungal disease in crops/trees.

In another aspect, the present disclosure provides use of a fungicidal combination comprising captan and pyrimethanil for controlling fungal diseases in crops/trees.

In yet another aspect, the present disclosure provides a method for controlling fungal diseases in crops or trees, said method comprising applying to the crops or trees, or to a locus, or to a plant propagation material thereof an effective amount of a fungicidal combination comprising at least one multi-site fungicide and at least one anilinopyrimidine fungicide.

In yet another aspect, the present disclosure provides a method for controlling fungal diseases in crops or trees, said method comprising applying to the crops or trees, or to a locus, or to a plant propagation material thereof an effective amount of a fungicidal combination comprising at least one phthalimide fungicide and at least one anilinopyrimidine fungicide.

In yet another aspect, the present disclosure provides A method for controlling growth of fungal diseases, the method comprising applying to a tree, or to a locus or a plant propagation material thereof, an effective amount of a fungicidal combination comprising:

a. Pyrimethanil; and
b. at least a multisite fungicide.

In yet another aspect, the present disclosure provides a method for controlling fungal diseases in a plant, said method comprising applying to the plant, or to a locus, or to a plant propagation material thereof an effective amount of a fungicidal combination comprising captan and pyrimethanil.

Additional features and advantages of the present disclosure will be apparent from the detailed description that follows, which illustrates by way of example, the most preferred features of the present disclosure which are not to be construed as limiting the scope of the disclosure described herein.

## DETAILED DESCRIPTION OF THE DISCLOSURE

The present disclosure now will be described hereinafter with reference to the accompanying examples, in which embodiments of the disclosure are shown. This description is not intended to be a detailed catalogue of all the different ways in which the disclosure may be implemented, or all the features that may be added to the instant disclosure. For example, features illustrated with respect to one embodiment may be incorporated into other embodiments, and features illustrated with respect to a particular embodiment may be deleted from that embodiment. Thus, the disclosure contemplates that in some embodiments of the disclosure, any feature or combination of features set forth herein can be excluded or omitted. In addition, numerous variations and additions to the various embodiments suggested herein will be apparent to those skilled in the art in light of the instant disclosure, which do not depart from essence of the invention disclosed. Hence, the following descriptions are intended to illustrate some particular embodiments of the disclosure, and not to exhaustively specify all permutations, combinations and variations thereof.

Unless otherwise defined, all technical and scientific terms used herein have the same meaning as commonly understood by one of ordinary skill in the art to which this disclosure belongs. Although methods and materials similar or equivalent to those described herein can be used in the practice or testing of the disclosure, suitable methods and materials are described herein.

It must be noted that, as used in this specification, the singular forms "a," "an" and "the" include plural referents unless the content clearly dictates otherwise. The terms first, second etc., as used herein are not meant to denote any particular ordering, but simply for convenience to denote a plurality of, for example, layers. The terms "preferred" and "preferably" refer to embodiments of the disclosure that may afford certain benefits, under certain circumstances.

As used herein, the terms "comprising" "including," "having," "containing," "involving," and the like are to be understood to be open-ended, i.e., to mean including but not limited to.

As used herein, the term "about" or "approximately" is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within $\pm$ 10% or $\pm$ 5% of the stated value.

Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and independently combinable. As used herein, all numerical values or numerical ranges include integers within such ranges and fractions of the values or the integers within ranges unless the context clearly indicates otherwise. Thus, for example, reference to a range of 90-100%, includes 91%, 92%, 93%, 94%, 95%, 95%, 97%, etc., as well as 91.1%, 91.2%, 91.3%, 91.4%, 91.5%, etc., 92.1%, 92.2%, 92.3%, 92.4%, 92.5%, etc., and so forth. All methods described herein can be performed in a suitable order unless otherwise indicated herein or otherwise clearly contradicted by context.

The use of any examples, or exemplary language (e.g., "such as"), is intended merely to better illustrate the disclosure and does not pose a limitation on the scope of the disclosure unless otherwise claimed. No language in the specification should be construed as indicating any non-claimed element as essential to the practice of the disclosure as used herein.

While the disclosure has been described with reference to an exemplary embodiment, it will be understood by those skilled in the art that various changes may be made, and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure is not limited to the particular embodiment disclosed as the best mode contemplated for carrying out this disclosure, but that the disclosure will include all embodiments falling within the scope of the appended claims.

As used herein, the expression of various quantities in terms of "%" or "% w/v" or "% w/w" means the percentage by weight of the total solution or composition unless otherwise specified.

As used herein, the term "agrochemical" used herein is understood to denote an agricultural chemical such as pesticides, fungicides, insecticides, acaricides, herbicides, nematicides, plant growth regulators and can be used interchangeably.

As used herein, the term "agrochemically acceptable salt" means a salt which is acceptable for use in agrochemical or horticultural use. The salts referred to herein are agrochemically acceptable salts.

As used herein, the term "fungicide" denotes a compound which controls or modifies the growth of fungus.

As used herein, the term "fungicidal" refers to the ability of a substance to control or modify the growth of fungus or its spores.

As used herein, the term "fungicidally effective amount" indicates the quantity of such a compound or combination of such compounds which is capable of controlling or modifying the growth of the fungus. The terms "effective amount" or "agriculturally acceptable effective amount", refer to an amount of an active ingredient, such as in the disclosed combination(s), which has an adverse effect on a fungus, treats or prevents a fungal disease in a plant, and is not significantly toxic to the plant being treated. The adverse effect can include killing of the fungus (fungicidal), preventing growth of the fungus, blocking of biosynthetic pathway(s), or a combination thereof.

As used herein, the term "control" or "disease control" refers to the treatment and/or prevention of a disease, and specifically, a fungal disease. Controlling effects include any and all deviations from the natural development of the disease, for example: killing of the fungal agent, retardation of disease development, and decrease in amount or degree of the fungal disease.

As used herein, the term "plant(s)" or "crop(s)" refers to the physical parts of a plant, including for example, seeds, seedlings, saplings, roots, tubers, stems, stalks, foliage, and fruits. This term also encompasses plant crops such as fruits. The term "plant" is limited to a living plant organism which expresses a set of characteristics determined by its single, genetic makeup or genotype, which can be duplicated through asexual reproduction, but which cannot otherwise be "made" or "manufactured.

The term "plant" may further include the propagation material thereof, which may include all the generative parts of the plant such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

As used herein, the term "locus" refers to the vicinity, area, or place in which the plants are growing, where plant propagation materials of the plants are sown, and/or where the plant propagation materials of the plants will be placed into soil.

As used herein, the term "plant propagation material" is understood to refer to all of the generative parts of a plant, such as seeds, vegetative material such as cuttings or tubers, roots, fruits, tubers, bulbs, rhizomes, and other parts of plants, germinated plants, and/or young plants which are to be transplanted after germination or after emergence from the soil. These young plants may be protected prior to transplantation by a total or partial immersion treatment/system.

As used herein, the term "seed" embraces seeds and plant propagules of all kinds including but not limited to true seeds, seed pieces, suckers, corms, bulbs, fruit, tubers, grains, cuttings, cut shoots and the like.

As used herein the term "pome fruit tree" or "pome fruit producing tree" refers to a tree which can produce pome fruits.

As used herein the term "stone fruit tree" or "stone fruit producing tree" refers to a tree which can produce stone fruits.

The term "tree" generally refers to any plant with the general form of an elongated stem, or trunk, which supports the photosynthetic leaves or branches at some distance above the ground. The term "tree" also encompasses shrubs, which are smaller trees with a height of 0.5 meter to 10 meters.

The phrase "part of a stone fruit tree" or "part of a pome fruit tree" as used herein refers to any one or more of the leaves, the shoots, the branches, the flowers, the fruits, the stem, or the roots of a stone fruit tree or a pome fruit tree.

In certain embodiments, the leaves, shoots, flowers, branches, fruits, stem or roots of the aforesaid tree, when treated according to the methods as taught herein, may be attached to (e.g. growing on) the tree. Alternatively, post-harvest methods of treating fruits for further processing, storage, handling and transportation may be included in the methods as taught herein.

The phrase "locus of a tree" as used herein refers to an area in close proximity of a tree. For instance, the locus of a tree may be a circular area around the stem of a tree such as a circular area having a diameter of at most 10 meters, for instance at most 5 meters, at most 4 meters, at most 3 meters, at most 2 meters, at most 1 meter, or at most 0.5 meter, around the stem of a tree.

As used herein, the term "increased yield" of an agricultural plant means that the yield of a product of the respective plant is increased by a measurable amount over the yield of the same product of the plant produced under the same conditions, but without the application of the compositions described herein. The composition also increases the vigour/yield of the plant.

As used herein, the term "g ai/L" as used herein denotes the concentration of the respective active ingredient in "grams" present "per litre" of the composition.

As used herein, the term "g ai/h" as used herein denotes the amount of the respective active ingredient in "grams" applied "per hectare" of the crop field or of the tree plantation.

As used herein, the term "kg ai/h" as used herein denotes the amount of the respective active ingredient in "kilograms" applied "per hectare" of the crop field or of the tree plantation.

Multi-site fungicides affect multiple target sites, and consequently interfere with numerous metabolic processes of the attacking phytopathogenic fungi.

Phthalamides are a class of multisite fungicides which are broad-spectrum fungicides and phthalamides includes captan, captafol and folpet used as surface protectants on many crops.

Another class of fungicides are systemic fungicides which are absorbed into the plant. Systemic fungicides act deeper, infiltrating leaves, stems and seeds and fighting fungi that are already attacking the inside of a plant. Anilinopyrimidine is one such class of fungicide which are highly active against a broad range of fungi. The biological mode of action includes inhibition of methionine biosynthesis and secretion of hydrolytic enzymes. Anilinopyrimidine fungicides comprise pyrimethanil, cyprodinil, mepanipyrim, or combinations thereof.

Pyrimethanil is a broad spectrum, aminopyrimidine fungicide having the IUPAC name N-(4,6-dimethylpyrimidin-2-yl) aniline. Pyrimethanil has protective action with some curative properties. Pyrimethanil inhibits methionine biosynthesis and thus has a direct effect on protein formation.

In another embodiment, it has been found that the combination of a multi-site fungicide and an anilinopyrimidine fungicide improves the efficacy of individual fungicides against fungal pests affecting a crop. There was a clear increase in the control and a decrease in percentage incidence and percentage severity of fungal disease affecting the crop/tree. The advantages of the disclosed combination were not observed when either multi-site fungicide or the anilinopyrimidine fungicide were used alone. Therefore, the unexpected advantages of the present disclosure were attributed to the combination of the multi-site fungicide and the anilinopyrimidine fungicide. More particularly, the present disclosure provides a combination comprising captan and pyrimethanil for the control of scab in stone fruit trees and in stone fruits. The aforementioned combination of fungicidal actives used is synergistic and hence can be applied to control and prevent infections caused by phytopathogenic fungi

Accordingly in an embodiment, the present disclosure provides fungicidal combinations for controlling fungal diseases in crops.

In an embodiment, the present disclosure provides a fungicidal combination comprising:

(a) at least one multi-site fungicide; and
(b) at least one anilinopyrimidine fungicide.

As used throughout the disclosure, the multi-site fungicide or the anilinopyrimidine fungicide, include their salts, esters, ethers, polymorphs including solvates and hydrates. A salt includes salts that retain the biological effectiveness and properties of the active ingredient, and which are not biologically or otherwise undesirable, and include derivatives of the disclosed compounds in which the parent compound is modified by making inorganic and organic, non-toxic, acid or base addition salts thereof. The salts can be synthesized from the parent compound by conventional chemical methods.

In an embodiment, the multi-site fungicides are selected from the group comprising phthalimides, a copper salt, a sulphur-based fungicide, dithiocarbamates, chloronitriles, sulfamides, bis-guanidines, triazines, quinones, quinoxalines, maleimide and thiocarbamates.

In a preferred embodiment, the multi-site fungicide comprises phthalimides.

In another preferred embodiment, the phthalimide fungicide comprises captan, captafol and folpet.

In the most preferred embodiment, the phthalimide fungicide comprises captan.

In a preferred embodiment, the multisite fungicide is a copper compound.

In an embodiment, the multisite fungicide comprises a copper salt.

In an embodiment, the copper salt is selected from the group comprising copper sulphate, tribasic copper sulphate, dibasic copper sulphate, copper oxychloride, copper chloride, copper oxide, cupric oxide, copper nitrate, copper perchlorate, copper bromide, copper hydroxide, copper iodide, cupric acetate, or copper sulfate pentahydrate.

In a preferred embodiment, the copper salt is tribasic copper sulphate.

In a preferred embodiment, the multisite fungicide is a sulphur-based fungicide.

According to an embodiment, the anilinopyrimidine fungicide is selected from the group comprising pyrimethanil, cyprodinil, mepanipyrim, or combinations thereof.

In a preferred embodiment, the anilinopyrimidine fungicide comprises pyrimethanil.

In a preferred embodiment, the anilinopyrimidine fungicide comprises cyprodinil.

In an embodiment, the present disclosure provides a fungicidal combination comprising:

(a) at least one multi-site fungicide; and
(b) pyrimethanil.

In a preferred embodiment, the present disclosure provides a fungicidal combination comprising captan and pyrimethanil.

In an embodiment, the present disclosure provides a fungicidal combination comprising captafol and pyrimethanil.

In an embodiment, the present disclosure provides a fungicidal combination comprising folpet and pyrimethanil.

In an embodiment, the present disclosure provides a fungicidal combination comprising a copper salt and pyrimethanil.

In an embodiment, the present disclosure provides a fungicidal combination comprising a tribasic copper sulphate and pyrimethanil.

In an embodiment, the present disclosure provides a fungicidal combination comprising a sulphur-based fungicide and pyrimethanil.

Accordingly in an embodiment, the present disclosure provides a synergistic fungicidal combination comprising:

(a) at least one multi-site fungicide, and
(b) at least one anilinopyrimidine fungicide.

In an embodiment, the present disclosure provides a synergistic fungicidal combination comprising:

(a) at least one phthalimide fungicide, and
(b) at least one anilinopyrimidine fungicide

In an embodiment, the present disclosure provides a synergistic fungicidal combination comprising captan and pyrimethanil.

In an embodiment, the present disclosure provides a synergistic fungicidal combination comprising captafol and pyrimethanil.

In an embodiment, the present disclosure provides a synergistic fungicidal combination comprising folpet and pyrimethanil.

In an embodiment, the present disclosure provides a synergistic fungicidal combination comprising:

(a) at least one multi-site fungicide; and
(b) at least one anilinopyrimidine fungicide

wherein the multi-site fungicide and the anilinopyrimidine fungicide are combined in a ratio in the range from about 0.1:5 to about 5:0.1.

In another embodiment, the multi-site fungicide and the anilinopyrimidine fungicide are combined in a ratio from about 0.1:2 to about 2:0.1.

In another embodiment, the multi-site fungicide and the anilinopyrimidine fungicide are combined in a ratio from about 0.5:1 to about 1:0.5.

In another embodiment, the phthalimide fungicide and the anilinopyrimidine fungicide are combined in a ratio from about 0.1:5 to about 5:0.1.

In another embodiment, the phthalimide fungicide and the anilinopyrimidine fungicide are combined in a ratio in the range from about 0.1:2 to about 2:0.1.

In another embodiment, the phthalimide fungicide and the anilinopyrimidine fungicide are combined in a ratio from about 0.5:1 to about 1:0.5.

In an embodiment, the present disclosure provides a synergistic fungicidal combination comprising captan and pyrimethanil combined in a ratio in the range from about 0.01:50 to about 50:0.01.

In an embodiment, the present disclosure provides a synergistic fungicidal combination comprising captan and pyrimethanil combined in a ratio in the range from about 0.1:5 to about 5:0.1.

In an embodiment, the present disclosure provides a synergistic fungicidal combination comprising captan and pyrimethanil combined in a ratio in the range from about 0.1:2 to about 2:0.1.

In an embodiment, the present disclosure provides a synergistic fungicidal combination comprising captan and pyrimethanil combined in a ratio in the range from about 0.5:1 to about 1:0.5.

In an embodiment, the present disclosure provides a synergistic fungicidal combination comprising folpet and pyrimethanil combined in a ratio in the range from about 0.01:50 to about 50:0.01.

In an embodiment, the present disclosure provides a synergistic fungicidal combination comprising folpet and pyrimethanil combined in a ratio in the range from about 0.1:5 to about 5:0.1.

In an embodiment, the present disclosure provides a synergistic fungicidal combination comprising folpet and pyrimethanil combined in a ratio in the range from about 0.1:2 to about 2:0.1.

In an embodiment, the present disclosure provides a synergistic fungicidal combination comprising folpet and pyrimethanil combined in a ratio in the range from about 0.5:1 to about 1:0.5.

In an embodiment, the present disclosure provides a fungicidal combination comprising:

(a) at least one phthalimide fungicide applied in an amount ranging from about 0.01 to about 10 kg/ha; and
(b) at least one anilinopyrimidine fungicide applied in an amount ranging from about 0.1 to about 10 L/ha.

In an embodiment, the present disclosure provides a fungicidal combination comprising:

(a) at least one phthalimide fungicide applied in an amount ranging from about 0.1 to about 5 kg/ha; and
(b) at least one anilinopyrimidine fungicide applied in an amount ranging from about 0.5 to about 5 L/ha.

In an embodiment, the present disclosure provides a fungicidal combination comprising:

(a) captan applied in an amount ranging from about 0.01 to about 10 kg/ha; and
(b) pyrimethanil applied in an amount ranging from about 0.1 to about 10 L/ha.

In an embodiment, the present disclosure provides a fungicidal combination comprising:

(a) captan applied in an amount ranging from about 0.1 to about 5 kg/ha; and
(b) pyrimethanil applied in an amount ranging from about 0.5 to about 5 L/ha.

In an embodiment, the present disclosure provides a fungicidal combination comprising:

(a) folpet applied in an amount ranging from about 0.1 to about 10 kg/ha; and
(b) pyrimethanil applied in an amount ranging from about 0.1 to about 10 L/ha.

In an embodiment, the present disclosure provides a fungicidal combination comprising:

(a) folpet applied in an amount ranging from about 0.1 to about 5 kg/ha; and
(b) pyrimethanil applied in an amount ranging from about 0.5 to about 5 L/ha.

In an embodiment, the present disclosure provides a fungicidal combination comprising:

(a) captafol applied in an amount ranging from about 0.1 to about 10 kg/ha; and
(b) pyrimethanil applied in an amount ranging from about 0.1 to about 10 L/ha.

In an embodiment, the present disclosure provides a fungicidal combination comprising:

(a) captafol applied in an amount ranging from about 0.1 to about 5 kg/ha; and
(b) pyrimethanil applied in an amount ranging from about 0.5 to about 5 L/ha.

In an embodiment, the constituents of the combination of the present invention may be tank mixed and sprayed at the locus of the infection or may be alternatively mixed with surfactants and then sprayed.

In an embodiment, the constituents of the combination of the present invention may be used for foliar application, ground or applications to plant propagation materials.

Accordingly in an embodiment, the present disclosure provides a fungicidal composition.

Accordingly in an embodiment, the present disclosure provides a fungicidal composition comprising:

(a) at least one multi-site fungicide;
(b) at least one anilinopyrimidine fungicide; and
(c) at least one agrochemically acceptable excipient.

In an embodiment, the anilinopyrimidine fungicide comprises pyrimethanil, cyprodinil, mepanipyrim, or combinations thereof.

In an embodiment, the multi-site fungicides are selected from the group comprising phthalimides, a copper salt, a sulphur-based fungicide, dithiocarbamates, chloronitriles, sulfamides, bis-guanidines, triazines, quinones, quinoxalines, maleimide and thiocarbamates.

In a preferred embodiment, the multi-site fungicide comprises phthalimides.

In another preferred embodiment, the phthalimide fungicide comprises captan, captafol and folpet.

In the most preferred embodiment, the phthalimide fungicide comprises captan.

In a preferred embodiment, the multisite fungicide is a copper compound.

In an embodiment, the multisite fungicide comprises a copper salt.

In an embodiment, the copper salt is selected from the group comprising copper sulphate, tribasic copper sulphate, dibasic copper sulphate, copper oxychloride, copper chloride, copper oxide, cupric oxide, copper nitrate, copper perchlorate, copper bromide, copper hydroxide, copper iodide, cupric acetate, or copper sulfate pentahydrate.

In a preferred embodiment, the copper salt is tribasic copper sulphate.

In a preferred embodiment, the multisite fungicide is a sulphur-based fungicide.

According to an embodiment, the anilinopyrimidine fungicide is selected from the group comprising pyrimethanil, cyprodinil, mepanipyrim, or combinations thereof.

In a preferred embodiment, the anilinopyrimidine fungicide comprises pyrimethanil.

In a preferred embodiment, the anilinopyrimidine fungicide comprises cyprodinil.

In an embodiment, the agrochemically acceptable excipients are selected from one or more of dispersant/dispersing agents, carriers, emulsifiers, colorants, thickeners/binders, antifreeze agents, antifoaming agents, antioxidants, solvents, preservatives, diluents, other auxiliary agents, or combinations thereof.

In another embodiment, the dispersant/dispersing agents include anionic surfactants such as alkyl sulfate ester salts, alkylaryl sulfonate salts, dialkyl sulfosuccinate salts, polyoxyethylene alkylaryl ether phosphate ester salts, lignosulfonate salts and naphthalene sulfonate formaldehyde polycondensates, sodium salt of naphthalene sulfonate condensate; and nonionic surfactants such as polyoxyethylene alkyl aryl ethers, polyoxyethylene alkylpolyoxypropylene block copolymers and sorbitan fatty acid esters and cationic surfactants such as alkyltrimethylammonium salts. Other examples include Acrylic copolymer solution, polyalkylene oxide block copolymer and combinations thereof.

In another embodiment, the carrier may include minerals such as kaolin clay, attapulgite clay, bentonite, montmorillonite, acid white clay, pyrophyllite, talc, diatomaceous earth and calcite; natural organic materials such as corn rachis powder and walnut husk powder; synthetic organic materials such as urea; salts such as calcium carbonate and ammonium sulfate; synthetic inorganic materials such as synthetic hydrated silicon oxide. Examples of the liquid carrier include aromatic hydrocarbons such as xylene, alkylbenzene and methylnaphthalene; alcohols such as 2-propanol, ethylene glycol, propylene glycol, and ethylene glycol monoethyl ether; ketones such as acetone, cyclohexanone and isophorone; vegetable oil such as soybean oil and cotton seed oil; petroleum aliphatic hydrocarbons, esters, dimethylsulfoxide, acetonitrile and water.

In another embodiment, emulsifiers which can be advantageously employed herein can be readily determined by those skilled in the art and include various non-ionic, anionic, cationic, and amphoteric emulsifiers, or a blend of two or more emulsifiers. Examples of non-ionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulfonic acids, oil-soluble salts or sulfated polyglycol ethers and appropriate salts of phosphated polyglycol ether. Other examples include tristyrylphenol ethoxylate, linear calcium alkylbenzene sulphonate, castor oil ethoxylate, and combinations thereof.

In an embodiment, colorants may be selected from iron oxide, titanium oxide and Prussian Blue, and organic dyestuffs, such as alizain dyestuffs, azo dyestuffs or metal phthalocyanine dyestuffs, and trace elements, such as salts of iron, manganese, boron, copper, cobalt, molybdenum and zinc.

In an embodiment, thickeners/binders/gelling agents may be selected from but not limited to molasses, granulated sugar, alginates, karaya gum, jaguar gum, tragacanth gum, polysaccharide gum, mucilage, xanthan gum or combination thereof. In another embodiment, the binder may be selected from silicates such as magnesium aluminium silicate, polyvinyl acetates, polyvinyl acetate copolymers, polyvinyl alcohols, polyvinyl alcohol copolymers, celluloses, including ethylcelluloses and methylcelluloses, hydroxymethyl celluloses, hydroxypropylcelluloses, hydroxymethylpropyl-celluloses, polyvinylpyrolidones, dextrins, malto-dextrins, polysaccharides, fats, oils, proteins, gum arabics, shellacs, vinylidene chloride, vinylidene chloride copolymers, calcium lignosulfonates, acrylic copolymers, starches, polyvinylacrylates, zeins, gelatin, carboxymethylcellulose, chitosan, polyethylene oxide, acrylimide polymers and copolymers, polyhydroxyethyl acrylate, methylacrylimide monomers, alginate, ethylcellulose, polychloroprene and syrups or mixtures thereof; polymers and copolymers of vinyl acetate, methyl cellulose, vinylidene chloride, acrylic, cellulose, polyvinylpyrrolidone and polysaccharide; polymers and copolymers of vinylidene chloride and vinyl acetate-ethylene copolymers; combinations of polyvinyl alcohol and sucrose; plasticizers such as glycerol, propylene glycol, polyglycols.

In another embodiment, antifreeze agent(s) added to the composition may be alcohols selected from the group comprising of but not limited to ethylene glycol, propylene glycol, 1,2-propylene glycol, 1,3-propylene glycol, 1,2-propanediol, 1,2-butanediol, 1,3-butanediol, 1,4-butanediol, 1,4-pentanediol, 3-methyl-1,5-pentanediol, 2,3-dimethyl-2,3-butanediol, trimethylol propane, mannitol, sorbitol, glycerol, pentaerythritol, 1,4-cyclohexanedimethanol, xylenol, bisphenols such as bisphenol A or the like. In addition, ether alcohols such as diethylene glycol, triethylene glycol, tetraethylene glycol, polyoxyethylene or polyoxypropylene glycols of molecular weight up to about 4000, diethylene glycol monomethyl ether, diethylene glycol monoethyl ether, triethylene glycol monomethyl ether, butoxyethanol, butylene glycol monobutyl ether, dipentaerythritol, tripentaerythritol, tetrapentaerythritol, diglycerol, triglycerol, tetraglycerol, pentaglycerol, hexaglycerol, heptaglycerol, octaglycerol.

According to an embodiment, antifoam agent may be selected from polydimethoxysiloxane, polydimethylsiloxane, dimethylsiloxane polymers, siloxane polyalkyleneoxide copolymer, polypropylene glycol, alkyl poly acrylates, castor oil, fatty acids, fatty acids esters, fatty acids sulfate, fatty alcohol, fatty alcohol esters, fatty alcohol sulfate, foot olive oil, mono & di glyceride, paraffin oil, paraffin wax, poly propylene glycol, silicones oil, vegetable fats, vegetable fats sulfate, vegetable oil, vegetable oil sulfate, vegetable wax, vegetable wax sulfate, agents based on silicon or magnesium stearate.

In another embodiment, antioxidants are, for example, amino acids (e.g., glycine, histidine, tyrosine, tryptophan) and derivatives thereof, imidazole and imidazole derivatives (e.g., urocanic acid), peptides, such as, for example, D,L-carnosine, D-carnosine, L-carnosine and derivatives thereof (e.g., anserine), carotenoids, carotenes (e.g., $\alpha$-carotene, $\beta$-carotene, lycopene) and derivatives thereof, lipoic acid and derivatives thereof (e.g., dihydrolipoic acid), aurothioglucose, propylthiouracil and further thio compounds (e.g., thioglycerol, thiosorbitol, thioglycolic acid, thioredoxin, glutathione, cysteine, cystine, cystamine and the glycosyl, N-acetyl, methyl, ethyl, propyl, amyl, butyl, lauryl, palmitoyl, oleyl, $\gamma$-linoleyl, cholesteryl and glyceryl esters thereof), and salts thereof, dilauryl thiodipropionate, distearyl thiodipropionate, thiodipropionic acid and derivatives thereof (esters, ethers, peptides, lipids, nucleotides, nucleosides and salts), and sulfoximine compounds (e.g., buthionine sulfoximines, homocysteine sulfoximine, buthionine sulfones, penta-, hexa-, heptathionine sulfoximine) in very low tolerated doses (e.g., pmol/kg to pmol/kg), also metal chelating agents (e.g., $\alpha$-hydroxy fatty acids, EDTA, EGTA, phytic acid, lactoferrin), $\alpha$-hydroxy acids (e.g., citric acid, lactic acid, malic acid), humic acids, bile acid, bile extracts, gallic esters (e.g., propyl, octyl and dodecyl gallate), flavonoids, catechins, bilirubin, biliverdin and derivatives thereof, unsaturated fatty acids and derivatives thereof (e.g., $\gamma$-linolenic acid, linoleic acid, arachidonic acid, oleic acid), folic acid and derivatives thereof, hydroquinone and derivatives thereof (e.g., arbutin), ubiquinone and ubiquinol, and derivatives thereof, vitamin C and derivatives thereof (e.g., ascorbyl palmitate, stearate, dipalmitate, acetate, Mg ascorbyl phosphates, sodium and magnesium ascorbate, disodium ascorbyl phosphate and sulfate, potassium ascorbyl tocopheryl phosphate, chitosan ascorbate), isoascorbic acid and derivatives thereof, tocopherols and derivatives thereof (e.g., tocopheryl acetate, linoleate, oleate and succinate, tocophereth-5, tocophereth-10, tocophereth-12, tocophereth-18, tocophereth-50, tocophersolan), vitamin A and derivatives (e.g., vitamin A palmitate), the coniferyl benzoate of benzoin resin, rutin, rutinic acid and derivatives thereof, disodium rutinyl disulfate, cinnamic acid and derivatives thereof (e.g., ferulic acid, ethyl ferulate, caffeic acid), kojic acid, chitosan glycolate and salicylate, butylhydroxytoluene, butylhydroxyanisol, nordihydroguaiacic acid, nordihydroguaiaretic acid, trihydroxybutyrophenone, uric acid and derivatives thereof, mannose and derivatives thereof, selenium and selenium derivatives (e.g., selenomethionine), stilbenes and stilbene derivatives (e.g., stilbene oxide, trans-stilbene oxide). According to the disclosure, suitable derivatives (salts, esters, sugars, nucleotides, nucleosides, peptides, and lipids) and mixtures of these specified active ingredients or plant extracts (e.g., tea tree oil, rosemary extract and rosemarinic acid) which comprise these antioxidants can be used. In general, mixtures of the aforementioned antioxidants are possible.

According to an embodiment, examples of suitable solvents are water, oils of vegetable, cyclohexanone, 2-butoxyethanol, or derivatives thereof. In principle, solvent mixtures may also be used.

In another embodiment, suitable preservatives are for example benzothiazoles, 1,2-benzisothiazolin-3-one, sodium dichloro-s-triazinetrione, sodium benzoate, potassium sorbate, 1,2-phenyl-isothiazolin-3-one, 2-bromo-2-nitro-1,3-propanediol, inter chloroxylenol paraoxybenzoate butyl and benzoic acid & combination thereof.

According to an embodiment, example of suitable diluent is water.

According to an embodiment, examples of the other auxiliary agents that can be included in the composition include water-soluble polymers such as polyvinyl alcohol and polyvinylpyrrolidone, polysaccharides such as Arabic gum, alginic acid, or a salt thereof, carboxymethylcellulose (CMC), Xanthan gum, inorganic materials such as aluminum magnesium silicate and alumina sol, preservatives, coloring agents and stabilization agents such as acid phosphate isopropyl (PAP), and butylated hydroxytoluene (BHT).

In an embodiment, the fungicidal composition comprises from about 1% w/w to about 60% w/w of the multi-site fungicide of total weight of the composition.

In an embodiment, the fungicidal composition comprises from about 1% w/w to about 30% w/w of the multi-site fungicide of total weight of the composition.

In an embodiment, the fungicidal composition comprises from about 1% w/w to about 60% w/w of captan of total weight of the composition.

In a preferred embodiment, the fungicidal composition comprises from about 1% w/w to about 30% w/w of captan of total weight of the composition.

In an embodiment, the fungicidal composition comprises from about 1% w/w to about 60% w/w of the anilinopyrimidine fungicide of total weight of the composition.

In an embodiment, the fungicidal composition comprises from about 1% w/w to about 30% w/w of the anilinopyrimidine fungicide of total weight of the composition.

In an embodiment, the fungicidal composition comprises from about 1% w/w to about 60% w/w of pyrimethanil of total weight of the composition.

In an embodiment, the fungicidal composition comprises from about 1% w/w to about 30% w/w of pyrimethanil of total weight of the composition.

According to an embodiment, the fungicidal composition comprises from about 1% w/w to about 30% w/w of the agriculturally acceptable excipient of total weight of the composition.

In an embodiment, the compositions of the present disclosure are produced by combining the actives with at least one agrochemically acceptable excipient to prepare a mixture and formulating the mixture into a solid or liquid formulation. Examples of the solid or liquid formulation includes, but are not limited to, wettable powders, granules, dusts, soluble (liquid) concentrates, suspension concentrates (SC), oil in water emulsions (EW), water in oil emulsions, emulsifiable concentrates, capsule suspensions, ZC (mixed formulation of capsule suspension and suspension concentrate) formulations, oil dispersions, other known formulation types, or a combination thereof.

According to an embodiment, the present disclosure provides a fungicidal composition comprising:

(a) at least one multi-site fungicide;
(b) at least one anilinopyrimidine fungicide; and
(c) at least one agrochemically acceptable excipient

wherein the fungicidal composition is present in a form of a liquid formulation.

According to an embodiment, the present disclosure provides a fungicidal composition comprising:

(a) at least one multi-site fungicide;
(b) at least one anilinopyrimidine fungicide; and
(c) at least one agrochemically acceptable excipient

wherein the fungicidal composition is present in a form of a tank mix or a pre-formulated (pre-mix)/ready-mix formulation.

In a preferred embodiment, the present disclosure provides a fungicidal composition comprising:

(a) at least one phthalimide fungicide;
(b) at least one anilinopyrimidine fungicide; and
(a) at least one agrochemically acceptable excipient;

wherein the fungicidal composition is present in a form of a tank mix or a pre-formulated (pre-mix)/ready-mix formulation.

In a preferred embodiment, the present disclosure provides a fungicidal composition comprising:

(a) captan;
(b) pyrimethanil; and
(c) at least one agrochemically acceptable excipient;

wherein the fungicidal composition is present in a form of a tank mix or a pre-formulated (pre-mix)/ready-mix formulation.

According to an embodiment, the present disclosure provides a fungicidal composition in a form of a tank mix formulation.

According to an embodiment, the present disclosure provides a fungicidal composition in a form of a pre-formulated (pre-mix)/ready-mix formulation.

In another embodiment, the fungicidal combinations disclosed herein may be applied simultaneously as a tank mix or together as a pre-mix formulation.

In yet another embodiment, the fungicidal compositions may be applied to the soil prior to emergence of the plants/fruits (pre-emergence), either pre-planting or post-planting. Alternatively, the application of the fungicidal composition may be a post-emergent application (post-emergence).

In another embodiment, the fungicidal combination/composition may be applied onto surface of fruits.

In yet another embodiment, the fungicidal combination may be applied as a foliar spray at different timings during crop or fruit development, with as many early applications (pre-emergence) or late post-emergence.

According to an embodiment, the present disclosure provides use of a fungicidal combination comprising at least one multi-site fungicide and at least one anilinopyrimidine fungicide, for controlling growth of fungal disease in plants.

According to an embodiment, the present disclosure provides use of the fungicidal combination for controlling fungal growth, wherein the fungicidal combination comprises:

(a) at least one multi-site fungicide; and
(b) at least one anilinopyrimidine fungicide.

In another embodiment, the present disclosure provides use of the fungicidal combination for controlling growth of fungal diseases, wherein the fungicidal combination comprises:

(a) at least one phthalimide fungicide; and
(b) at least one anilinopyrimidine fungicide.

In another embodiment, the fungicidal combinations and/or compositions may be applied before or after infection of the plants or the propagation material thereof, by the fungi.

In another embodiment, the fungicidal combinations and compositions may be used for foliar application, application to a ground or to a plant or to a locus or to a plant propagation material, or combinations thereof.

According to an embodiment, the process for preparation of the fungicidal combination comprises:
adding and mixing at least one multi-site fungicide and at least one anilinopyrimidine fungicide, to obtain the fungicidal combination.

According to an embodiment, the process for preparation of the fungicidal combination comprises:
adding and mixing at least one phthalimide fungicide and at least one anilinopyrimidine fungicide, to obtain the fungicidal combination.

In a preferred embodiment, the process for preparation of the fungicidal combination comprises:
adding and mixing captan and pyrimethanil, to obtain the fungicidal combination.

According to an embodiment, the process for preparation of the fungicidal composition comprises:
adding and mixing at least one multi-site fungicide, at least one anilinopyrimidine fungicide and at least one agrochemically acceptable excipient, to obtain the fungicidal composition.

According to an embodiment, the process for preparation of the fungicidal composition comprises:
adding and mixing at least one phthalimide fungicide, at least one anilinopyrimidine fungicide and at least one agrochemically acceptable excipient, to obtain the fungicidal composition

In a preferred embodiment, the process for preparation of the fungicidal composition comprises:
adding and mixing captan, pyrimethanil and at least one agrochemically acceptable excipient, to obtain the fungicidal composition.

According to an embodiment, the present disclosure provides a method for controlling growth of fungal diseases in a plant/tree, the method comprising applying to a plant, or a locus, or a plant propagation material thereof, an effective amount of a fungicidal combination comprising at least one multi-site fungicide and at least one anilinopyrimidine fungicide.

In an embodiment, the present disclosure provides a method for controlling fungal growth in a plant, the method comprising applying to a plant/tree, or a locus, or a plant propagation material thereof, an effective amount of a fungicidal combination comprising at least one phthalimide fungicide and at least one anilinopyrimidine fungicide.

In a preferred embodiment, the present disclosure provides a method for controlling growth of fungal disease in a plant/tree, the method comprising applying to a plant, or a locus, or a plant propagation material thereof, an effective amount of a fungicidal combination comprising captan and pyrimethanil.

In a preferred embodiment, the present disclosure provides a method for controlling fungal growth in a plant, the method comprising applying to a plant/tree, or a locus, or a plant propagation material thereof, an effective amount of a fungicidal combination comprising folpet and pyrimethanil.

In a preferred embodiment, the present disclosure provides a method for controlling growth of fungal disease in a plant, the method comprising applying to a plant/tree, or a locus, or a plant propagation material thereof, an effective amount of a fungicidal combination comprising captafol and pyrimethanil.

According to another embodiment, the examples of trees and plants include pome fruits and stone fruits.

In a preferred embodiment, the pome fruits comprise apples, pears, asian pears, quinces, loquats, and crab apples.

In a preferred embodiment, the stone fruit comprises peaches, plums, apricots, dates, mangoes, coconuts, and cherries.

In a preferred embodiment, the apple trees (apple crop) are cultivated throughout the world, and their fruit is edible and widely consumed. Apple crops are affected by fungi such as, but not limited to *Venturia inaequalis, Podosphaera leucotricha, Diplocarpon mali, Botryosphaeria obtusa, Botryosphaeria dothidea,* and *Colletotrichum species.*

In another preferred embodiment, peach plants are grown in both the northern and southern hemispheres. The major pests of peach include, but are not limited to *Alternaria alternate, Monilinia fructicola, Monilinia laxa, Armillaria spp.,* and *Cercospora circumscissa.*

According to an embodiment, the present disclosure provides a method for controlling growth of fungal diseases, the method comprising applying to the tree, or to a locus or a plant propagation material thereof, an effective amount of a fungicidal combination comprising:

a. Pyrimethanil; and
b. at least a multisite fungicide.

According to an embodiment, the present disclosure provides a method for controlling growth of fungal diseases in pome fruit trees, the method comprising applying to the tree, or to a locus or a plant propagation material thereof, an effective amount of a fungicidal combination comprising:

(b) at least one multi-site fungicide; and
(c) at least one anilinopyrimidine fungicide.

According to an embodiment, the present disclosure provides method for controlling growth of fungal diseases in pome fruit trees, the method comprising applying to the tree, or to a locus or a plant propagation material thereof, an effective amount of a fungicidal combination comprising:

a. Pyrimethanil; and
b. at least a multisite fungicide.

According to an embodiment, the present disclosure provides method for controlling growth of fungal diseases in stone fruit trees, the method comprising applying to the tree, or to a locus or a plant propagation material thereof, an effective amount of a fungicidal combination comprising:

c. Pyrimethanil; and
d. at least a multisite fungicide.

According to an embodiment, the present disclosure provides a method for controlling growth of fungal diseases in pome fruit trees, the method comprising applying to the tree, or to a locus or a plant propagation material thereof, an effective amount of a fungicidal combination comprising:

(a) at least one phthalimide fungicide; and
(b) at least one anilinopyrimidine fungicide.

According to an embodiment, the present disclosure provides a method for controlling growth of fungal disease in pome fruit trees, the method comprising applying to the tree, or to a locus or a plant propagation material thereof, an effective amount of a fungicidal combination comprising:

(a) captan; and
(b) pyrimethanil.

According to an embodiment, the present disclosure provides a method for controlling growth of fungal diseases in stone fruit trees, the method comprising applying to the tree, or to a locus or a plant propagation material thereof, an effective amount of a fungicidal combination comprising:

(a) at least one multi-site fungicide; and
(b) at least one anilinopyrimidine fungicide.

According to an embodiment, the present disclosure provides a method for controlling growth of fungal diseases in stone fruit trees, the method comprising applying to the tree, or to a locus or a plant propagation material thereof, an effective amount of a fungicidal combination comprising:

(a) at least one phthalimide fungicide; and
(b) at least one anilinopyrimidine fungicide.

According to an embodiment, the present disclosure provides a method for controlling growth of fungal disease in stone fruit trees, the method comprising applying to the tree, or to a locus or a plant propagation material thereof, an effective amount of a fungicidal combination comprising:

(a) captan; and
(b) pyrimethanil.

According to an embodiment, the present disclosure provides a method for controlling scab in pome fruit trees, the method comprising applying to the tree, or to a locus or a plant propagation material thereof, an effective amount of a fungicidal combination comprising:

(a) at least one multi-site fungicide; and
(b) at least one anilinopyrimidine fungicide.

According to an embodiment, the present disclosure provides a method for controlling scab in pome fruit trees, the method comprising applying to the tree, or to a locus or a plant propagation material thereof, an effective amount of a fungicidal combination comprising:

(a) at least one phthalimide fungicide; and
(b) at least one anilinopyrimidine fungicide.

According to an embodiment, the present disclosure provides a method for controlling scab in pome fruit trees, the method comprising applying to the tree, or to a locus or a plant propagation material thereof, an effective amount of a fungicidal combination comprising:

(a) captan; and
(b) pyrimethanil.

According to an embodiment, the present disclosure provides a method for controlling *Venturia inaequalis* in pome fruit trees, the method comprising applying to the tree, or to a locus or a plant propagation material thereof, an effective amount of a fungicidal combination comprising:

(a) at least one multi-site fungicide; and
(b) at least one anilinopyrimidine fungicide.

According to an embodiment, the present disclosure provides a method for controlling *Venturia inaequalis* in pome fruit trees, the method comprising applying to the tree, or to a locus or a plant propagation material thereof, an effective amount of a fungicidal combination comprising:

(a) at least one phthalimide fungicide; and
(b) at least one anilinopyrimidine fungicide.

According to an embodiment, the present disclosure provides a method for controlling *Venturia inaequalis* in pome fruit trees, the method comprising applying to the tree, or to a locus or a plant propagation material thereof, an effective amount of a fungicidal combination comprising:

(a) captan; and
(b) pyrimethanil.

According to an embodiment, the present disclosure provides a method for controlling growth of fungal disease in a crops or trees, the method comprising applying to the crop or a tree, or a locus or a plant propagation material thereof, an effective amount of a fungicidal composition comprising:

(a) at least one multi-site fungicide;
(b) at least one anilinopyrimidine fungicide; and
(c) at least one agrochemically acceptable excipients.

According to an embodiment, the present disclosure provides a method for controlling growth of fungal disease in a crops or trees, the method comprising applying to the crop or a tree, or a locus or a plant propagation material thereof, an effective amount of a fungicidal composition comprising:

(a) at least phthalimide fungicide;

(b) at least one anilinopyrimidine fungicide; and
(c) at least one agrochemically acceptable excipients.

According to an embodiment, the present disclosure provides a method for controlling growth of fungal disease in a crop or trees, the method comprising applying to the crop, or tree, an effective amount of a fungicidal composition comprising:

(a) captan;
(b) pyrimethanil; and
(c) at least one agrochemically acceptable excipient.

In a preferred embodiment, the tree is a stone fruit tree or a pome fruit tree.

In an embodiment, the present disclosure provides a method of controlling a fungal disease in crops or trees, the method comprising applying to the crop, or tree, an effective amount of a fungicidal combination comprising:

(a) at least one multi-site fungicide applied in an amount ranging from 500 g ai/ha to 1000 g/ha; and
(b) at least one anilinopyrimidine fungicide applied in an amount ranging from about 100 g ai/ha to 500 g ai/ha.

In an embodiment, the present disclosure provides a method of controlling a fungal disease in crops or trees, the method comprising applying to the crop, or tree, an effective amount of a fungicidal combination comprising:

(a) at least one multi-site fungicide applied in an amount ranging from about 600 g ai/ha to 800 g ai/ha; and
(b) at least one anilinopyrimidine fungicide applied in an amount ranging from 200 g ai/ha to about 300 g ai/ha.

In an embodiment, the present disclosure provides a method of controlling a fungal disease in a crop or trees, the method comprising applying to the crop, or tree, an effective amount of a fungicidal combination comprising:

(a) at least one phthalimide fungicide applied in an amount ranging from about 600 g ai/ha to 800 g ai/ha; and
(b) at least one anilinopyrimidine fungicide applied in an amount from about 200 g ai/ha to 300 g ai/ha .

In an embodiment, the present disclosure provides a method of controlling a fungal disease in crops or trees, the method comprising applying to the crop, or tree, an effective amount of a fungicidal combination comprising:

(a) captan applied in an amount ranging from about 500 g ai/ha to about 1000 g ai/ha; and
(b) pyrimethanil applied in an amount ranging from about 100 g ai/ha to about 500 g ai/ha.

In an embodiment, the present disclosure provides a method of controlling a fungal disease in crops or trees, the method comprising applying to the crop, or tree, an effective amount of a fungicidal combination comprising:

(a) captan applied in an amount ranging from about 600 g ai/ha to about 800 g ai/ha; and
(b) pyrimethanil applied in an amount ranging from about 200 g ai/ha to about 300 g ai/ha.

In an embodiment, the present disclosure provides a method of controlling a fungal disease in pome fruit trees, the method comprising applying to the pome fruit tree or its locus or a part of the tree, an effective amount of a fungicidal combination comprising:

(a) at least one multi-site fungicide applied in an amount ranging from about 500 g ai/ha to about 1000 g ai/ha; and
(b) at least one anilinopyrimidine fungicide applied in an amount ranging from about 100 g ai/ha to about 500 g ai/ha.

In an embodiment, the present disclosure provides a method of controlling a fungal disease in pome fruit trees, the method comprising applying to the pome fruit tree or its locus or a part of the tree, an effective amount of a fungicidal combination comprising:

(a) at least one multi-site fungicide applied in an amount ranging from about 600 g ai/ha to about 800 g ai/ha; and
(b) at least one anilinopyrimidine fungicide applied in an amount ranging from about 200 g ai/ha to about 300 g ai/ha.

In an embodiment, the present disclosure provides a method of controlling a fungal disease in pome fruit trees, the method comprising applying to the pome fruit tree or its locus or a part of the tree, an effective amount of a fungicidal combination comprising:

(a) at least one phthalimide fungicide applied in an amount ranging from about 500 g ai/ha to about 1000 g ai/ha; and
(b) at least one anilinopyrimidine fungicide applied in an amount ranging from 100 g ai/ha to about 500 g ai/ha.

In an embodiment, the present disclosure provides a method of controlling a fungal disease in pome fruit trees, the method comprising applying to the pome fruit tree or its locus or a part of the tree, an effective amount of a fungicidal combination comprising:

(a) at least one phthalimide fungicide applied in an amount ranging from 600 g ai/ha to about 800 g ai/ha; and
(b) at least one anilinopyrimidine fungicide applied in an amount ranging from about 200 g ai/ha to about 300 g ai/ha.

In an embodiment, the present disclosure provides a method of controlling a fungal disease in pome fruit trees, the method comprising applying to the pome fruit tree or its locus or a part of the tree, an effective amount of a fungicidal combination comprising:

(a) captan applied in an amount ranging from about 500 g ai/ha to about 1000 g ai/ha; and
(b) pyrimethanil applied in an amount ranging from about 100 g ai/ha to about 500 g ai/ha.

In an embodiment, the present disclosure provides a method of controlling a fungal disease in pome fruit trees, the method comprising applying to the pome fruit tree or its locus or a part of the tree, an effective amount of a fungicidal combination comprising:

(a) captan applied in an amount ranging from about 600 g ai/ha to about 800 g ai/ha; and
(b) pyrimethanil applied in an amount ranging from 200 g ai/ha to about 300 g ai/ha .

According to an embodiment of the present disclosure, the various components of the fungicidal combination can be used individually or already partially or completely mixed with one at least one other to prepare the combination according to the disclosure. It is also possible for them to be packaged and used further as composition such as a kit of parts.
The disclosure also provides a kit comprising fungicidal combination for the controlling fungal growth or growth of fungal disease and instructions for use. The instructions for use typically comprise instructions for the application of the fungicidal combination to the plant, or to a locus, or to a plant propagation material thereof.
According to an embodiment, the kit of parts comprises:

a) at least one multi-site fungicide;
b) at least one anilinopyrimidine fungicide;

and optionally further comprises:
c) instructions for use.
According to an embodiment, the kit of parts comprises:

a) at least one phthalimide fungicide;
b) at least one anilinopyrimidine fungicide;

and optionally further comprises:
c) instructions for use.
According to an embodiment, the kit of parts comprises:

a) captan;
b) pyrimethanil;

and optionally further comprises:
c) instructions for use.
According to an embodiment, the kit of parts comprises:

a) at least one multi-site fungicide;
b) at least one anilinopyrimidine fungicide;

c) at least one agrochemically acceptable excipient;

and optionally further comprises:
d) instructions for use.

In one embodiment of the disclosure, the kit may include one or more, including all, components that may be used to prepare the fungicidal combination, e.g., kits may include active ingredients and/or agrochemically acceptable excipient. One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i.e., not pre-formulated. As such, kits may include one or more separate containers such as vials, cans, bottles, pouches, bags or canisters, each container containing a separate component for fungicidal combination.

In both forms, a component of the kit may be applied separately from or together with the further components or as a component of a combination according to the disclosure for preparing the fungicidal combination according to the disclosure.

In another embodiment, the fungicidal combination described above is stable, over time and at various temperatures.

All the features described herein may be combined with any of the above aspects, in any combination.

According to an embodiment, it has been found that certain weight ratios of the multi-site fungicides to the anilinopyrimidine fungicide are able to provide synergistic activity. Therefore, a further aspect of the disclosure are compositions in which the multi-site fungicides and the anilinopyrimidine fungicide are present in amounts producing a synergistic effect. This synergistic activity is apparent from the fact that the fungicidal activity of the composition comprising both the multi-site fungicides and the anilinopyrimidine fungicide is greater than the sum of the individual fungicidal activities of the multi-site fungicide and the anilinopyrimidine fungicide. Fungicidal activity of the combinations can be seen from the examples which follow. While the individual active compounds show less activity with regard to fungicidal activity, certain combinations have a fungicidal activity which exceeds the expected efficacy. These combinations or compositions as described above may be used in a synergistically effective amount. It can be seen from the examples herein below that the fungicidal action of the combinations according to the disclosure exceeds the calculated value, that is to say that the fungicidal combinations have a synergistic effect in controlling growth of fungal disease in plants.

In yet another embodiment, whether a combination is synergistic or not is synergistic is determined by comparison of observed efficacy of the fungicidal combination to that of expected efficacy of the fungicidal combination. This is calculated by Colby's Equation.

In Colby's equation given below, E is the expected efficacy of the combination of the multi-site fungicides and the anilinopyrimidine fungicide, X is the observed efficacy of the multi-site fungicides, and Y is the observed efficacy of the anilinopyrimidine fungicide. Observed efficacy values (i.e., X and Y) are the percentage (%) of disease control (e.g., percent reduction in fungal disease severity) for the multi-site fungicides and the anilinopyrimidine fungicide used alone. If the observed efficacy of the combination of multi-site fungicides and the anilinopyrimidine fungicide is greater than its expected efficacy, then the combination is determined to be synergistic. If the observed efficacy is equal to or less than the expected efficacy, then the combination is determined to be non-synergistic.

$$\text{Colby's equation: } E = X + Y - XY/100$$

In an embodiment, the present disclosure provides a synergistic agrochemical combination.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the particular embodiment disclosed as the best mode contemplated for carrying out this invention, but that the invention will include all embodiments falling within the scope of the appended claims. Any combination of the above-described elements in all possible variations thereof is encompassed by the invention unless otherwise indicated herein or otherwise clearly contradicted by context. These and other advantages of the disclosure may become more apparent from the examples set forth herein below. These examples are provided merely as illustrations of the disclosure and are not intended to be construed as a limitation thereof.

**EXAMPLES:**

Example 1

Field trials were carried out to evaluate the bio-efficacy of the fungicidal combination of captan and pyrimethanil against a phytopathogenic fungal infection affecting apple trees caused by *Venturia inaequalis.* Table 1 provides a summary of the treatments, the combination of actives that was tested, and the range of the application rate of the combination and the consequent % control.

Table 1:

| No. | Treatment | Application rates (g ai/ha) | Observed % control | Expected % control |
|---|---|---|---|---|
| 1. | Untreated | 0.0 | 0.0 | - |
| 2. | Captan | 800 | 44.2 | - |
| 3. | Captan | 600 | 14.3 | - |
| 4. | Pyrimethanil | 400 | 52.2 | - |
| 5. | Captan + Pyrimethanil | 800 + 400 | 97.7 | 73.32 |
| 6. | Captan + Pyrimethanil | 600 + 400 | 81.6 | 59.03 |

The observed control of target pest *Venturia inaequalis* by the combination of captan and pyrimethanil is greater than the calculated/expected control of the said pest.

Example 2

Field trials were carried out to evaluate the bio-efficacy of the fungicidal combination of captan and pyrimethanil against a phytopathogenic fungal infection affecting apple trees caused by *Venturia inaequalis.* Table 2 provides a summary of the treatments, the combination of actives that was tested, and the range of the application rate of the combination and the consequent % control.

Table 2:

| No. | Treatment | Application rates (g ai/ha) | Observed % control | Expected % control |
|---|---|---|---|---|
| 1. | Captan | 800 | 54 | - |
| 2. | Pyrimethanil | 300 | 40 | - |
| 3. | Captan + Pyrimethanil | 800 + 300 | 77 | 72.4 |

The observed control of target pest *Venturia inaequalis* by the combination of captan and pyrimethanil is greater than the calculated/expected control of the said pest.

Specifically, the invention includes embodiments in which particular subject matter is excluded, in full or in part, such as substances or materials, method steps and conditions, protocols, procedures, assays or analysis. Thus, even though the invention is generally not expressed herein in terms of what the invention does not include, aspects that are not expressly included in the invention are nevertheless disclosed herein. A number of embodiments of the invention have been described. Nevertheless, it will be understood that various modifications may be made without departing from the spirit and scope of the invention.

**Claims**

1. A method for controlling growth of fungal diseases, the method comprising applying to a tree, or to a locus or a plant propagation material thereof, an effective amount of a fungicidal combination comprising:

   a. Pyrimethanil; and
   b. at least a multisite fungicide.

2. The method as claimed in claim 1, wherein the multisite fungicide is selected from phthalimides, a copper salt, a sulphur-based fungicide, dithiocarbamates, chloronitriles, sulfamides, bis-guanidines, triazines, quinones, quinoxalines, maleimide and thiocarbamates.

3. The method as claimed in claim 2, wherein phthalimides are selected from captan, captafol and folpet.

4. The method as claimed in claim 1, wherein pyrimethanil is applied at a rate in the range from about 100 to 500 g ai/ha.

5. The method as claimed in claim 1, wherein multisite fungicide is applied at a rate in the range from about 500 to 1000 g ai/ha.

6. The method as claimed in claim 1, wherein pyrimethanil and the multi-site fungicides are combined in a ratio in the range from about 0.1:5 to about 5:0.1.

7. The method as claimed in claim 1, wherein the fungicidal combination and composition are used for controlling fungal infestation in pome and stone fruits trees.

8. The method as claimed in claim 1, wherein fungal infestation is caused by fungal pests selected from the group comprising *Venturia inaequalis, Podosphaera leucotricha, Diplocarpon mali, Botryosphaeria obtusa, Botryosphaeria dothidea,* and *Colletotrichum species, Alternaria alternate, Monilinia fructicola, Monilinia laxa, Armillaria spp.,* and *Cercospora circumscissa.*

9. A fungicidal composition, comprising:

   a. Pyrimethanil
   b. at least a multisite fungicide; and
   c. at least an agrochemically acceptable excipient.

10. Use of a fungicidal combination or composition comprising pyrimethanil and at least a multisite fungicide for controlling fungal infestation in pome fruit trees.

Europäisches
Patentamt

European
Patent Office

Office européen
des brevets

# EUROPEAN SEARCH REPORT

**Application Number**

EP 25 15 0848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/329712 A1 (LAMPRECHT SYBILLE [DE] ET AL) 22 October 2020 (2020-10-22) <br> * paragraphs [0001], [0018] - [0020], [0079] - [0080], [0088], [0129] - [0135] * <br> * treatment 2; table 1 * <br> * Treatment 2-4; table 4 * | 1-10 | INV. <br> A01N43/54 <br> A01P3/00 <br> A01N41/12 <br> A01N47/04 |
| X | CN 103 563 931 A (CHEN BIN) 12 February 2014 (2014-02-12) <br> * claim 1 * <br> * paragraphs [0005] - [0010] * | 1-3,6,9, 10 | |
| X | CN 104 585 177 B (SHAANXI TANGPUSEN BIOTECH CO) 5 April 2017 (2017-04-05) <br> * claims 1, 3 * <br> * tables 10, 14 * | 9 | |
| X | US 2023/247995 A1 (PORTERFIELD DUNK [US] ET AL) 10 August 2023 (2023-08-10) <br> * paragraphs [0005] - [0015], [0043] - [0045], [0053], [0056], [0112], [0119], [0128] - [0130] * <br> * paragraphs [0186] - [0187], [0220] - [0022], [0423], [0433] * | 1,4-6,9, 10 | **TECHNICAL FIELDS SEARCHED (IPC)** <br><br> A01N <br> A01P |
| A | US 2012/157486 A1 (LORSBACH BETH [US] ET AL) 21 June 2012 (2012-06-21) <br> * example 2 * | 1-10 | |
| X | US 2005/019420 A1 (DUVERT PATRICE [FR]) 27 January 2005 (2005-01-27) <br> * paragraphs [0024], [0025], [0036], [0044], [0047], [0049] - [0052], [0058] - [0059], [0067], [0086] - [0091] * | 1-3,7-10 | |

-/--

| The present search report has been drawn up for all claims | | |
|---|---|---|
| Place of search | Date of completion of the search | Examiner |
| Munich | 19 May 2025 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 15 0848

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/270113 A1 (CERNUSCHI MATTEO [IT] ET AL) 31 August 2023 (2023-08-31) * paragraphs [0074], [0119] - [0121], [0173], [0348] - [0356] * | 1-10 | |
| T | LUO XIONG-FEI ET AL: "Structural Simplification of Luotonin F: Discovery of Quinoline Derivatives as Novel Antifungal Agents for Plant Protection", JOURNAL OF AGRICULTURAL AND FOOD CHEMISTRY , vol. 73, no. 7 4 February 2025 (2025-02-04), pages 3865-3873, XP093261124, US ISSN: 0021-8561, DOI: 10.1021/acs.jafc.4c08389 Retrieved from the Internet: URL:https://pubs.acs.org/doi/pdf/10.1021/acs.jafc.4c08389 [retrieved on 2025-03-19] * abstract * * figure 1 * * figure 7 * * page 3871, left-hand column, paragraph fourth - right-hand column, paragraph first * | | |
| | | | **TECHNICAL FIELDS SEARCHED (IPC)** |

The present search report has been drawn up for all claims

| Place of search | Date of completion of the search | Examiner |
|---|---|---|
| Munich | 19 May 2025 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 0848

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2025

| Patent document cited in search report | Publication date | Patent family member(s) | Publication date |
|---|---|---|---|
| US 2020329712 A1 | 22-10-2020 | BR 112020012487 A2 | 24-11-2020 |
| | | CN 111741680 A | 02-10-2020 |
| | | EP 3726989 A1 | 28-10-2020 |
| | | JP 7361696 B2 | 16-10-2023 |
| | | JP 2021506888 A | 22-02-2021 |
| | | KR 20200100768 A | 26-08-2020 |
| | | UA 127788 C2 | 03-01-2024 |
| | | US 2020329712 A1 | 22-10-2020 |
| | | WO 2019121525 A1 | 27-06-2019 |
| CN 103563931 A | 12-02-2014 | NONE | |
| CN 104585177 B | 05-04-2017 | NONE | |
| US 2023247995 A1 | 10-08-2023 | AR 128412 A1 | 08-05-2024 |
| | | AU 2023214834 A1 | 12-09-2024 |
| | | CO 2024012007 A2 | 09-12-2024 |
| | | JP 2025504123 A | 06-02-2025 |
| | | US 2023247995 A1 | 10-08-2023 |
| | | WO 2023148487 A1 | 10-08-2023 |
| US 2012157486 A1 | 21-06-2012 | AR 084303 A1 | 08-05-2013 |
| | | AU 2011341547 A1 | 04-07-2013 |
| | | BR 112013014945 A2 | 19-07-2016 |
| | | CA 2821391 A1 | 21-06-2012 |
| | | CL 2013001735 A1 | 06-12-2013 |
| | | CN 103369960 A | 23-10-2013 |
| | | CO 6721013 A2 | 31-07-2013 |
| | | CR 20130285 A | 27-06-2013 |
| | | EC SP13012691 A | 30-08-2013 |
| | | EP 2651217 A1 | 23-10-2013 |
| | | JP 2013545804 A | 26-12-2013 |
| | | KR 20140003459 A | 09-01-2014 |
| | | PH 12013501252 A1 | 15-07-2013 |
| | | RU 2013132715 A | 27-01-2015 |
| | | TW 201304682 A | 01-02-2013 |
| | | US 2012157486 A1 | 21-06-2012 |
| | | WO 2012082372 A1 | 21-06-2012 |
| | | ZA 201304372 B | 27-08-2014 |
| US 2005019420 A1 | 27-01-2005 | AR 037334 A1 | 03-11-2004 |
| | | AT E394032 T1 | 15-05-2008 |
| | | AU 2002358878 B2 | 07-12-2006 |
| | | BR 0213918 A | 31-08-2004 |
| | | CA 2463707 A1 | 15-05-2003 |
| | | CN 1582115 A | 16-02-2005 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**   EP 25 15 0848

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2025

| Patent document cited in search report | | Publication date | Patent family member(s) | | Publication date |
|---|---|---|---|---|---|
| | | | CO | 5590859 A2 | 30-12-2005 |
| | | | EP | 1441590 A1 | 04-08-2004 |
| | | | ES | 2305332 T3 | 01-11-2008 |
| | | | FR | 2831768 A1 | 09-05-2003 |
| | | | HK | 1071035 A1 | 08-07-2005 |
| | | | IL | 161637 A | 30-11-2010 |
| | | | JP | 2005507430 A | 17-03-2005 |
| | | | KR | 20050044356 A | 12-05-2005 |
| | | | MA | 27148 A1 | 03-01-2005 |
| | | | MX | PA04004316 A | 11-08-2004 |
| | | | NZ | 532342 A | 26-08-2005 |
| | | | PL | 209101 B1 | 29-07-2011 |
| | | | PT | 1441590 E | 08-07-2008 |
| | | | RU | 2278516 C2 | 27-06-2006 |
| | | | TW | I336242 B | 21-01-2011 |
| | | | UA | 78528 C2 | 10-04-2007 |
| | | | US | 2005019420 A1 | 27-01-2005 |
| | | | WO | 03039257 A1 | 15-05-2003 |
| | | | ZA | 200402967 B | 30-03-2005 |
| US 2023270113 | A1 | 31-08-2023 | AU | 2021306905 A1 | 23-02-2023 |
| | | | BR | 112023000205 A2 | 25-04-2023 |
| | | | CA | 3185119 A1 | 13-01-2022 |
| | | | CL | 2023000069 A1 | 08-09-2023 |
| | | | CN | 116096237 A | 09-05-2023 |
| | | | CO | 2023000510 A2 | 26-01-2023 |
| | | | CR | 20230077 A | 26-07-2023 |
| | | | EC | SP23008337 A | 31-03-2023 |
| | | | EP | 4178358 A1 | 17-05-2023 |
| | | | IL | 299711 A | 01-03-2023 |
| | | | JP | 2023533554 A | 03-08-2023 |
| | | | PE | 20230375 A1 | 06-03-2023 |
| | | | US | 2023270113 A1 | 31-08-2023 |
| | | | WO | 2022009154 A1 | 13-01-2022 |

EPO FORM P0459

For more details about this annex : see Official Journal of the European Patent Office, No. 12/82

page 2 of 2